Europäisches Patentamt

European Patent Office

Office européen des brevets

(11) Veröffentlichungsnummer: **0 265 688 B1**

(12) **EUROPÄISCHE PATENTSCHRIFT**

(45) Veröffentlichungstag der Patentschrift: **11.11.92**

(21) Anmeldenummer: **87114192.5**

(22) Anmeldetag: **29.09.87**

(51) Int. Cl.⁵: **G05D 23/19**, B29C 45/72

(54) **Einrichtung (Kühleinrichtung) zur Konstanthaltung der Temperatur in den funktionell kritischen Temperaturzonen einer Kunststoff-Spritzgiessmaschine.**

(30) Priorität: **28.10.86 DE 3636635**

(43) Veröffentlichungstag der Anmeldung:
**04.05.88 Patentblatt 88/18**

(45) Bekanntmachung des Hinweises auf die
Patenterteilung:
**11.11.92 Patentblatt 92/46**

(84) Benannte Vertragsstaaten:
**AT CH DE FR GB IT LI NL**

(56) Entgegenhaltungen:
**EP-A- 0 194 629**
**DE-A- 3 308 138**
**FR-A- 2 023 951**
**FR-A- 2 238 574**

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr. et al**
**Patentanwälte Dr. Mayer & Frank Westliche 24**
**W-7530 Pforzheim(DE)**

Rank Xerox (UK) Business Services

## Beschreibung

Die Erfindung bezieht sich auf eine Künhleinrichtung entsprechend dem Oberbegriff des Patentanspruches 1.

Bei den üblichen Kühleinrichtungen dieser Art (US-PS 3.974.857) werden die Kühlkreisläufe mittels manuell zu betätigender Hähne gesteuert, wobei der ungefähre Kühlbedarf an der Schwebehöhe von Schwebekörpern in vertikalen Glasrohrabschnitten der Kühlkreisläufe an Skalen ablesbar ist.

Aus der US-PS 3 566 439 ist auch eine Einrichtung zur Temperatursteuerung von Formen bei Maschinen zur Verarbeitung von heißem oder geschmolzenem Material bekannt, mit einer von einem gemeinsamen Zuflußkanal abzweigenden Versorgung und mit Vorrichtungen zur Erfassung des jeweiligen Kühlbedarfes und der bedarfsorientierten Veränderung der Durchflußmengen in den Kühlkreisläufen, bei der die Durchflußmengen in den Kühlkreisläufen mit Hilfe eines Rechners mittels Ventilen regelbar sind, wobei die Ventile durch Elektromotoren betätigt werden.

In Versuchen ergab sich, daß die Streuung des Gewichts und der Abmessungen der Spritzlinge einer Spritzgießform von der Temperaturkonstanz in den kritischen Bereichen der Spritzgießmaschine, insbesondere der Temperaturkonstanz der Spritzgießform und des Einzugsbereiches des Granulats in den Plastifizierzylinder, aber auch von der Temperaturkonstanz des Drucköls im hydraulischen Kreislauf in wesentlich höherem Grade als bisher angenommen, abhängig ist.

Hiervon ausgehend liegt der Erfindung die Aufgabe zugrunde, eine Kühleinrichtung der eingangs genannten Art derart weiterzubilden, daß die Abweichungen von der Soll-Temperatur in den temperaturkritischen Bereichen bei tragbarem technischem Aufwand wesentlich reduziert werden können und die erreichte Temperaturkonstanz ohne nennenswerte Wartungsarbeiten zeitlich nahezu unbegrenzt aufrecht erhalten werden kann.

Diese Aufgabe wird erfindungsgemäß durch die im Patentanspruch 1 genannten Merkmale gelöst.

Es hat sich gezeigt, daß bei einer solchen Ausbildung insbesondere auch die negativen abrasiven und korrosiven Wirkungen von im Kühlmedium, insbesondere im Kühlwasser gelösten Fremdstoffen und dort aufgeschwemmten Feststoffen nahezu vollständig und zeitlich unbegrenzt unterdrückt werden können. Bei dieser Lösung liegen zudem die Voraussetzungen vor, daß durch ein kostensenkendes Zusammenwirken von spritztechnischen aund ventiltechnischen Maßnahmen der insgesamt etwas höhere ventil- und regeltechnische Aufwand in Grenzen gehalten werden kann. Dabei war nicht nur die Erkenntnis der spezifischen Eignung keramischer Dichtflächen für eine Erhöhung der Regelgenauigkeit infolge andauernder Selbstreinigung von den Schwebstoffen relativ unreiner Kühlmedien erforderlich, vielmehr mußte auch ein Weg gefunden werden, der den Einsatz solcher Dichtflächen bei rationeller Serienfertigung ermöglicht.

Nachstehend wird die Erfindung anhand der Zeichnung an einem Ausführungsbeispiel erläutert.

Es zeigen:

Fig. 1 die Kühleinrichtung (ohne Fühlerleitungen)in perspektivischer Darstellung,

Fig. 2 einen aufgeschnittenen Ausschnitt aus der Verteiler- und Steuereinheit gemäß Fig. 1 in Seitenansicht und in vergrößerter Darstellung,

Fig. 3, 4 Schnitte nach Linien III-III und IV-IV von Fig. 2 in vergrößerter Darstellung (rechter Kanalabschnitt (13') ist nicht geschnitten), und

Fig. 5 das endständige Formstück (F') der Kühleinrichtung gemäß Fig. 1 mit Rechnergehäuse und dem Anschluß eines Kühlkreislaufes und

Fig. 6 das den Ventilkanal (60) afuweisende Formstück (F) vom Getriebegehäuse her gesehen.

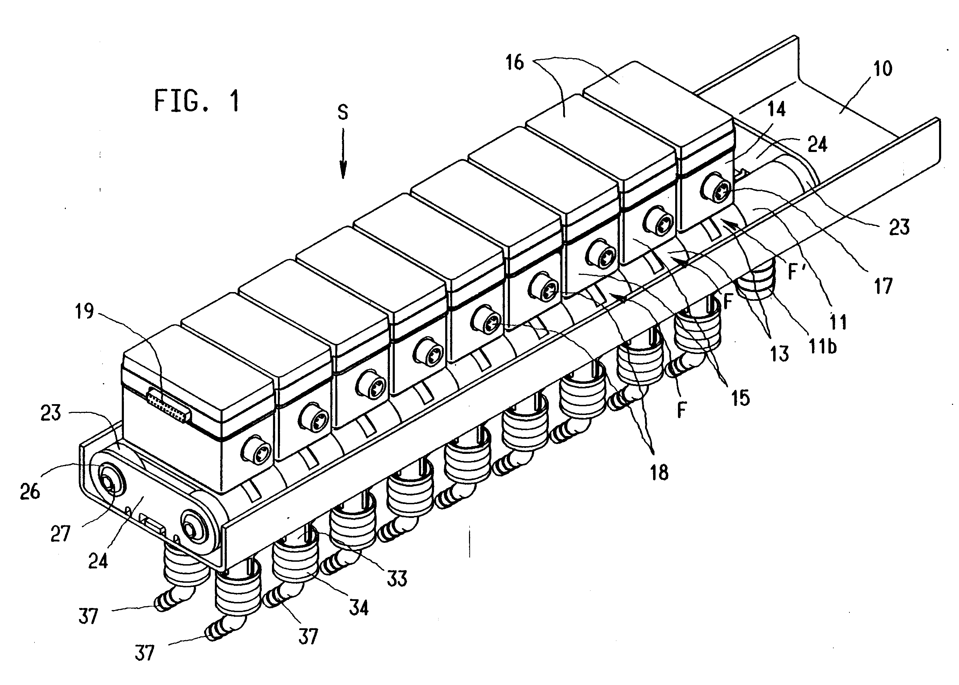

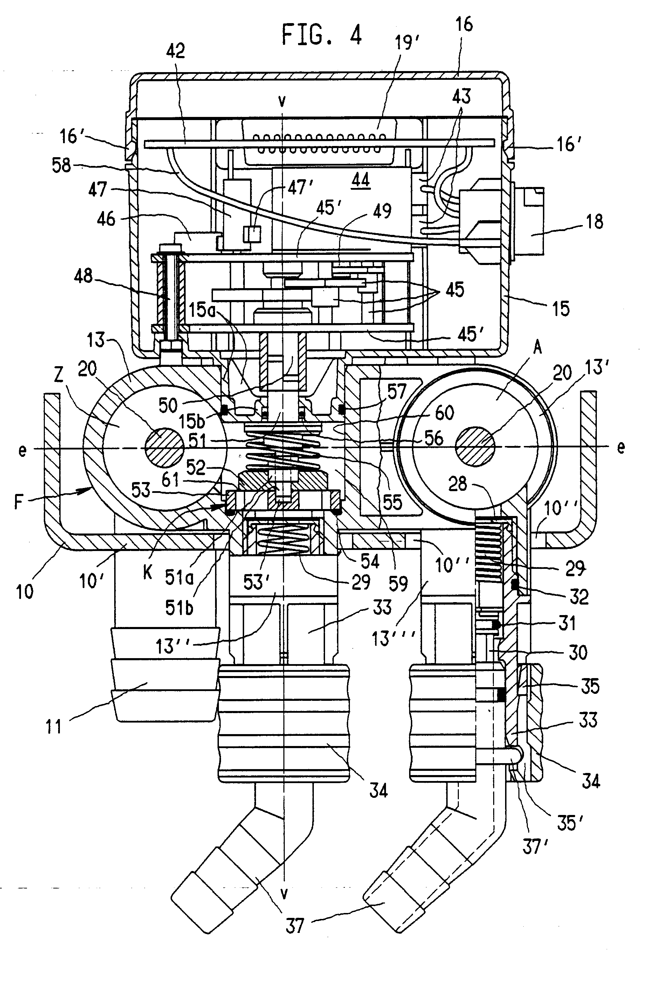

Die Kühleinrichtung kühlt temperierbedürftige bzw. temperaturkritische Bereiche der Kunststoff-Spritzgießmaschine mittels eines flüsigen Mediums, insbesondere mittels Leitungswasser. Sie umfaßt eine Verteiler- und Steuereinheit (Einheit S in Fig.1), an welche mehrere Kühlkreisläufe angeschlossen sind, in welchen die kühlbedürftigen Bereiche bzw. Funktionseinheiten (z.B. die Spritzgießform, das in einem Kühler zu temperierende Öl des Hydraulikkreislaufes, der Einzugsbereich des aus einem Vorratsraum kommenden Kunststoffgranulats in den Plastifizierzylinder)liegen. Die Kühlkreisläufe zweigen von einem gemeinsamen Zuflußkanal Z ab und münden in einen gemeinsamen Abflußkanal A. Zuflußkanal Z und Abflußkanal A sind durch aneinander gereihte, als Kanalabschnitte 13,13' gestaltete Formstücke F aus hochpolymerem Werkstoff zusammengesetzt. Dabei bilden die auf der einen Seite liegenden Kanalabschnitte 13 den Zulaufkanal Z und die im Abstand von diesen liegenden Kanalabschnitte 13' den parallelen Abflußkanal A. Jedes Formstück weist einen Anschlußstutzen 13" für die Einspeisung des Kühlmediums in den Kühlkrieslauf und ein Anschlußstutzen 13‴ für die Rückführung des Kühlmediums in den Abflußkanal A auf. Dabei sind die Anschlußstutzen 13‴ der Verteilereinheit radial zum Abflußkanal und die zu den Anschlußstutzen 13‴ parallelen Anschlußstutzen 13" für die Einspeisung des Kühlmediums in die Kühlkreisläufe zwischen Zulaufkanal Z und Ablaufkanal A angeordnet, wie insbesondere aus Fig. 4 ersichtlich.

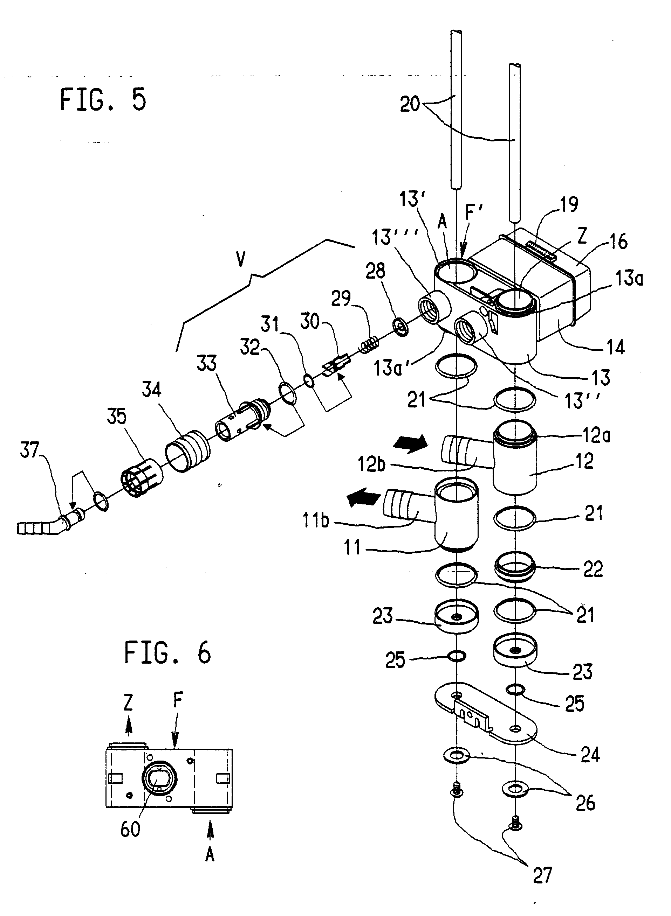

Zwischen diesen beiden Kanalabschnitten 13; 13′ ist ein senkrecht zum Zulaufkanal Z und Ablaufkanal A verlaufender Kanal (Ventilkanal 60 in Fig. 6) eingeformt, der zu Bildung der Ventilkammer 59 durch die Ventilsitz-Scheibe 53 abgedeckt ist.

Die Durchflußmengen in den Kühlkreisläufen sind mit Hilfe eines mit dem zentralen Rechner der Kunststoff-Spritzgießmaschine in Verbindung stehenden Rechners R mittels keramischer Drehventile K (Fig. 4) regelbar. Die diese keramischen Drehventile K aufnehmenden Ventilkammern 59 sind beidseits von den Kanalabschnitten 13, 13′ eines Formstückes F und rückseitig von einem Motor-Getriebegehäuse 15 begrenzt (Fig. 4). Insoweit bildet jedes Formstück F das Gehäuse für ein keramisches Drehventil K, dessen Drehachse v-v koaxial zum benachbarten Anschlußstutzen 13″ liegt. Die Formstücke F sind durch Zuganker 20 aus Edelstahl miteinander axial verspannt, welche koaxial im Zuflußkanal Z bzw. Abflußkanal A angeordnet sind und welche in einer Ebene e-e liegen, die senkrecht zur Ventilachse v-v und somit auch senkrecht zu den Achsen aller Anschlußstutzen 13″, 13‴ steht. Die Ventilkammern 59 kommunizieren mit dem Zulaufkanal Z über Anschnitte der benachbarten Kanalabschnitte 13, welche Anschnitte symmetrisch zur Ebene e-e liegen, was insbesondere aus Fig. 4 erkennbar ist. An jedem Formstück F ist ein rückseitig von einem Deckel 16 abgeschlossenes, quaderförmiges Motor-Getriebegehäuse 15 mittels Elementen 48 befestigt. Dabei verläuft die dem Formstück F zugewandte Seite des Motor-Getriebegehäuses 15 parallel zur Ebene e-e (Fig.4). In jedem Motor-Getriebegehäuse 15 ist eine senkrecht zur Ventilachse v-v stehende Printplatte 42 mit elektronischen Bauteilen 43 an der Rückseite eines das keramische Drehventil K antreibenden Schrittmotors 44 angeordnet, dessen Antriebsachse 49 parallel zur Ventilachse v-v liegt. Die Antriebsachse 49 kämmt mit einem Zahnrad eines Untersetzungsgetriebes 45, das zwischen Platinen 45′ gelagert ist. Ein Endlagerschalter 46 (Fig. 4) für die Ventilkörperscheibe 52 ist vom Steuernocken 47′ einer Steuerachse 47 schaltbar. Die Abtriebsachse 50 des Untersetzungsgetriebes 45 ist, wie aus Fig. 4 ersichtlich, mit der Antriebsachse 51 für das keramische Drehventeil K durch ein axiales Kupplungsprofil gekuppelt. Das keramische Drehventil K besteht aus einer keramischen Ventilsitz-Scheibe 53 und einer an dieser unter ständigem Druck anliegenden keramischen Ventilkörper-Scheibe 52, die über die Antriebsachse 51 mit Hilfe des Schrittmotors 44 drehbar, also von einem impulsgesteuerten Elektromotor angetrieben ist. Der ständige Anlagedruck der Ventilstiz-Scheibe 53 wird mit Hilfe einer vorgespannten Schraubenfeder 55 erzeugt, welcher die Antriebsachse 51 umschließt und die rückseitig am Motor-Getriebegehäuse 15 im Bereich einer zylindrischen Ausformung 15a anliegt. Die topfartige Ausformung 15a taucht zentrierend in eine entsprechende Ausnehmung des Formstückes F ein und begrenzt mit ihrer Stirnseite die Ventilkammer 59. Sie bildet gleichzeitig das zentrale Lager 15b für die Antriebsachse 51. Zur Abdichtung sind ein äußerer Dichtring 57 und ein innerer Dichtring 56 vorgesehen. Ein Mitnahmeprofil 51a der Antriebsachse 51 taucht als Mitnahmekupplung im Paßsitz in eine entsprechende Ausnehmung der Ventilkörper-Scheibe 52 ein. Der rotationssymmetrische Endabschnitt 51b der Antriebsachse 51 taucht in eine entsprechende zentrale Ausnehmung 53′ der keramischen Ventilsitz-Scheibe 53 ein und ist dort zentriert. Die keramische Ventilsitz-Scheibe 53 ist im Kunststoff-Formstück F drehfest festgelegt. Zur Festlegung dienen zwei diametrale Zapfen des Formstückes F, die in entsprechende Ausnehmungen der Ventilsitz-Scheibe 53 im Paßsitz eintauchen (in der Zeichnung nicht sichtbar). Zur Abdichtung der Ventilkammer 59 gegenüber dem Innenraum des Anschlußstutzens 13″ dient ein Dichtring 54, der in einer Ringnut in einer Auflageschulter für die Ventilsitz-Scheibe 53 angeordnet ist. Dabei ist die Ventilsitz-Scheibe 53 über die Ventilkörper-Scheibe 52 von der vorgespannten Schraubenfeder 55 in ihren drehfesten Paßsitz gedrückt. Ventilsitz-Scheibe 53 und Ventilkörper-Scheibe 52 sind derart gestaltet, daß sich bei Drehung der Ventilkörper-Scheibe 52 diametrale, kreisbogenförmige Durchflußschlitze 61 von zunehmender bzw. abnehmender Länge ergeben.

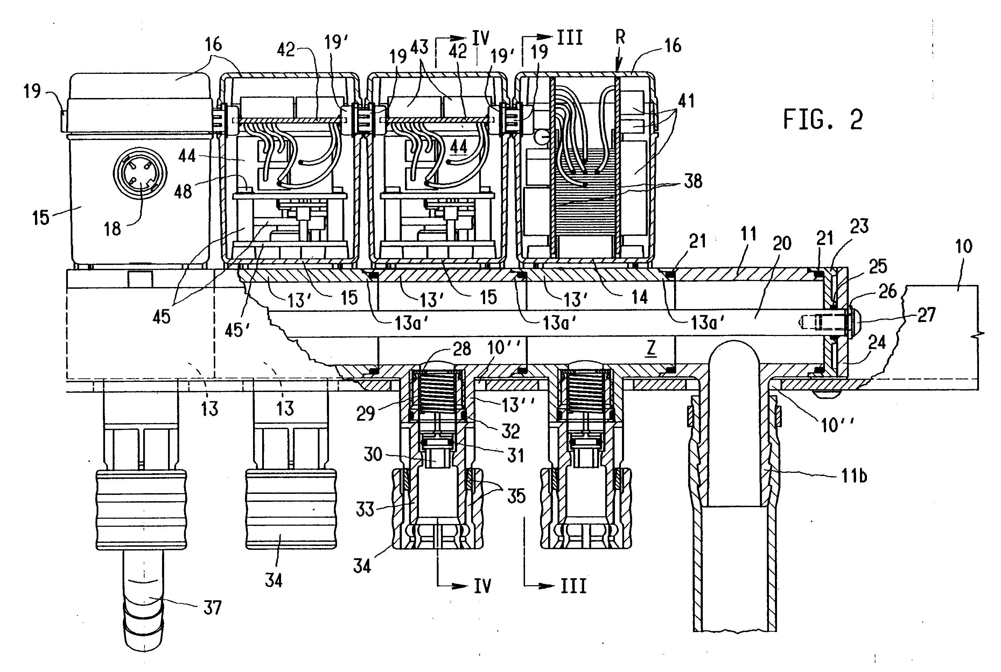

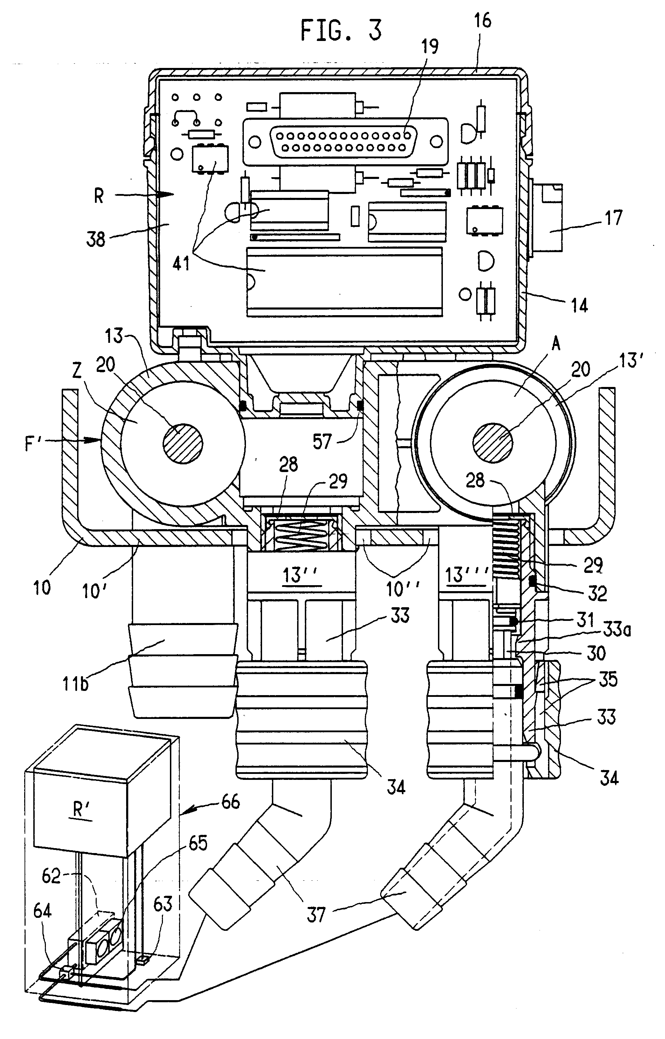

Wie aus Fig. 3 in Verbindung mit Fig. 1 erkennbar, sind muffenförmige Anschlußstücke 11,12 für den Zuflußkanal Z und den Abflußkanal A über ein ventilfreies identisches Zweig-Formstück F′ angeschlossen.Die Formstücke F und das Zweig-Formstück F′ sind dadurch aneinander zentriert, daß jeweils ein vorderseitiger axialer Zentrierflansch 13a′ der Kanalabschnitte 13′ und ein rückseitiger axialer Zentrierflansch 13a der Kanalabschnitte 13 der Formstücke F bzw. des Zweig-Formstückes F′ zentrierend, also im Paßsitz in eine entsprechende konzentrische Ausnehmung des benachbarten Formstückes F bzw. des Zweig-Formstückes F′ bzw. des Anschlußstückes 11 eingreifen. Alle Eingriffsfugen sind je mittels Dichtring 21 abgedichtet (Fig. 2,5). Demzufolge taucht ein axialer Zentrierflansch 12a des Anschlußstückes 12 für den Zuflußkanal Z über einen Dichtring 21 in eine entsprechende Zentrierausnehmung des Zweig-Formstückes F′ und der Zentrierflansch 13a′ des Formstückes F über einen Dichtring 21 in eine koaxiale Zentrierausnehmung des Anschlußstückes 11 zentrierend ein. Die mit Anschlußstutzen 11b und 12b versehenen Anschlußstücke 11 und 12 sind stirnseitig mit Verschlußkappen 23 abgedeckt, wobei zwischen dem Anschlußstück 12 und der Verschlußkappe 23 ein Adapterring 22 eingefügt ist. Dieser hat den Zweck, den beim Anschlußstück 12 stirnseitig fehlenden Zentrierflansch zu ersetzen, um gleiche Anschlußbedingungen für die Verschlußkappe 23 zu schaffen wie beim Anschlußstück 11. Die von Schrauben 27 axial gefaßten Zuganker 20 greifen über Scheiben 26 und eine Befestigungslasche 24 axial unter Zwischenschaltung von Dichtringen 25 an den Verschlußkappen an, um die Einheit S (Fig. 1) zusammenzuhalten. Der Abschluß der Einheit S am anderen Ende ist unter Verwendung eines Adapterringes 22, von Verschlußkappen 23, einer Befestigungslasche 24, Dichtringen 21,25 sowie Schrauben 27 und Scheiben 26 analog aufgebaut.

In den identischen Anschlußstutzen 13″;13‴ von Zulaufkanal Z und Ablaufkanal A sind rotationssymmetrische Muffen (Gehäusemuffen 33) koaxial aufgenommen. In diesen sind Verschlußventile V angeordnet, wie aus den Fign. 4,5 ersichtlich. Diese Verschlußventile V sind derart ausgebildet, daß sie bei Abnahme der ankuppelbaren Anschlußnippel 37 automatisch schließen. Zu diesem Zweck sind die Ventilkörper 30 der Verschlußventile V durch die angekuppelten Anschlußnippel 37 entgegen der Wirkung von koaxialen Schraubenfedern 29 Abstand von ihren Ventilsitzen 33a (Fig.3)gehalten, die durch die Gehäusemuffen 33 gebildet und an Haltescheiben 28 widergelagert sind. Ventilkörper 30 und Gehäusemuffen 33 sind mit Dichtringen 31,32 versehen. Die aus den Anschlußstutzen 13″,13‴ axial hervorragenden Endabschnitte der in diesen Anschlußstutzen zentrierten Gehäusemuffen 33 sind je von einer Spannzange 35 umschlossen. Spannzungen 35′, welche die zugehörige Gehäusemuffe 33 axial überragen, sind mittels eines umschließenden Spannringes 34 durch axiales Verschieben in Spannposition überführbar. In dieser umgreifen diese Spannzungen 35′ eine Ringrippe 37′ des Anschlußnippels 37.

Der Rechner R ist in einem an das Zweig-Formstück F′ angeschlossenen Rechnergehäuse 14 aufgenomen, das mit den Motor-Getriebegehäusen 15 der übrigen Formstücke F identisch gestaltet ist. Das rückseitig ebenfalls von einem Deckel 16 abgeschlossene Rechnergehäuse 14 weist zwei parallele Printplatten 38 mit elektronischen Bauteilen 41 auf. Diese sind parallel und symmetrisch zur Ventilachse v-v des benachbarten Drehventils K im Rechnergehäuse 14 befestigt. Die Motor-Getriebegehäuse 15 sind mittels Steckverbindungen 19, 19′ (Buchsenteil 19 und Stiftteil 19′) miteinander elektrisch verbunden. Auf je einer Schmalseite der Motor-Getriebegehäuse 15 ist eine Steckbuchse 18 für die zum Fühler an der Kühlzone des Kühlkreislaufes führende Leitung (Fühlerleitung) angeordnet. Das identische Rechnergehäuse 14 weist einen analog angeordneten vielpoligen Anschluß 17 für die Versorgungsleitung zum zentralen Rechner der Kunststoff-Spritzgießmaschine auf (Fig. 1,3). Mit 40 (Fig. 2) sind Anschlußleitungen zum Anschluß 17 (Fig. 3), mit 41, 43 elektrische Bauteile und mit 58 Anschlußleitungen zu den Fühleranschlüssen 18 bezeichnet (Fig. 2, 4).

Der vom ventilfreien Zweig-Formstück F′ abgehende Kühlkreislauf führt zu dem den zentralen Rechner R′ der Kunststoff-Spritzgießmaschine aufnehmenden Schaltschrank 66 (Fig. 3). Dieser Schaltschrank ist luftdicht abschließbar, da er von Tastaturen befreit ist. In ihm ist ein Wärmetauscher 62 angeordnet, der sich im Kühlkreislauf befindet. Der Kühlkreislauf ist mit Hilfe eines Thermofühlers 63 über den zentralen REchner R′ durch ein Verschlußventil 64 gesteuert, das bei Überschreiten der Soll-Temperatur im Schaltschrank 66 öffnet. Ein im Schaltschrank 66 angeordnetes luftumwälzendes Gerät 65, insbesondere ein Ventilator, sorgt für eine erhöhte Luftumwälzung im Schaltschrank.

Der Aufbau der Steuereinheit S aus identischen Formstücke F; F′ und identischen zugehörigen Motorgetriebegehäusen 15 sowie einem identischen Rechnergehäuse 14 ermöglicht eine Erhöhung bzw. Verminderung der Anzahl der Kühlkreisläufe durch Anreihung bzw. einer Wegnahme von Formstücken F ohne nennenswerten Aufwand.

**Patentansprüche**

1. Kühleinrichtung zur Konstanthaltung der Temperatur in den funktionell kritischen Temperaturzonen einer Kunststoff-Spritzgießmaschine,insbesondere mittels Leitungswasser, mit von einem gemeinsamen Zulaufkanal (Z) abzweigenden und in einen gemeinsamen Ablaufkanal (A) mündenden Kühlkreisläufen, welcher Zulaufkanal (Z) und Ablaufkanal (A) durch aneinandergereihte, als Kanalabschnitte (13; 13′) gestaltete und Anschlußstutzen (13″; 13‴) aufweisende Formstücke (F) zusammengesetzt sind und mit Vorrichtungen zur Erfassung des jeweiligen Kühlbedarfs und zur bedarfsorientierten Veränderung der Durchflußmengen in jedem Kühlkreislauf mit Hilfe eines Drosselventils (Drehventil K), welches in einem an der Bildung des Zulaufkanals (Z) teilhabenden Formstück (F) angeordnet ist, das die Ventilkammer (59) des Drosselventils (Drehventil K) begrenzt,
   dadurch gekennzeichnet, daß die Durchflußmengen in den Kühlkreisläufen mit Hilfe eines Rechners (R) mittels keramischer Drehventile (K in Fig. 4) regelbar sind, deren unter ständigem Druck mit Keramikdichtflächen an Ventilsitz-Scheiben (53) anliegende Ventilkörper-Scheiben (52) mittels impulsgesteuerter Elektromotoren (Schrittmotore 44) drehbar sind,

und daß in jedes der einen Kanalabschnitt (13) für den Zulaufkanal (Z) und einen Kanalabschnitt (13') für den Ablaufkanal (A) aufweisenden Formstücke (F) zwischen diesen beiden Kanalabschnitten (13; 13') ein senkrecht zum Zulaufkanal (Z) und Ablaufkanal (A) verlaufender Kanal (Ventilkanal 60 in Fig.6)eingeformt ist,der zur Bildung der Ventilkammer (59) durch die Ventilsitz-Scheibe (53) abgedeckt ist.

2. Kühleinrichtung nach Patentanspruch 1, dadurch gekennzeichnet, daß die Ventilsitz-Scheibe (53) auf einer Ringschulter des zugehörigen Formstückes (F) aufliegt, die am Übergang des Ventilkanals in einen Abschnitt geringerer lichter Weite gebildet ist.

3. Kühleinrichtung nach Patentanspruch 1 oder 2, dadurch gekennzeichnet, daß die Ventilkörper-Scheibe (52) und die Ventilsitz-Scheibe (53) unter der Kraft einer vorgespannten Feder (55) aneinanderliegen und derart gestaltet sind, daß sich bei Drehung der Ventilkörper-Scheibe (52) diametrale, kreisbogenförmige Durchflußschlitze von zunehmender bzw. abnehmender Länge ergeben, wobei geläppte Keramikdichtflächen senkrecht zur Ventilachse (v-v) stehen.

4. Kühleinrichtung nach einem der Patentansprüche 1-3, dadurch gekennzeichnet, daß die Kunststoff-Formstücke (F) durch Zuganker (20) miteinander axial verspannt sind, welche koaxial im Zulaufkanal (Z) bzw. Ablaufkanal (A) liegen.

5. Kühleinrichtung nach Patentanspruch 4, dadurch gekennzeichnet, daß die Ventilkammern (59) mit dem Zulaufkanal (Z) über Anschnitte der Kanalabschnitte (13) kommunizieren, die symmetrisch zur Ebene (e-e) liegen.

6. Kühleinrichtung nach einem der vorhergehenden Patentansprüche, dadurch gekennzeichnet, daß ein ventilfreies, mit den Formstücken (F) identisches Zweig-Formstück (F') an das endständige Formstück (F) angeschlossen und an diesem Zweigformstück (F') ein mit den Motor-Getriebegehäusen (15) identisches Rechnergehäuse (14) zentriert ist.

7. Kühleinrichtung nach einem der vorhergehenden Patentansprüche, dadurch gekennzeichnet, daß in den identischen Anschlußstutzen (13"; 13‴) jedes Kühlkreislaufes Muffen (Gehäusemuffen 33) koaxial aufgenommen und in diesen Verschlußventile (V) angeordnet sind, die bei Abnahme ankuppelbarer Anschlußnippel (37) automatisch schließen.

8. Kühleinrichtung nach einem der vorhergehenden Patentansprüche, dadurch gekennzeichnet, daß die quaderförmigen Motor-Getriebegehäuse (15) je eine koaxial zur Ventilachse (v-v) stehende zylindrische Ausformung (15a) in Fig. 4) aufweisen, die zentrierend in den Ventilkanal des benachbarten Formstückes (F) eintaucht.

9. Kühleinrichtung nach einem der vorhergehenden Patentansprüche, dadurch gekennzeichnet, daß Leitungswasser über Anschlußstutzen (13") in die Kühlkreisläufe und aus diesen kommend, über Anschlußstutzen (13‴) in den Ablaufkanal (A) einspeisbar ist und daß diese Anschlußstutzen (13"; 13‴) den Steg (10') einer U-förmigen Trägerschiene (10) über Durchbrüche (10") durchgreifen.

10. Kühleinrichtung nach einem der vorhergehenden Patentansprüche, dadurch gekennzeichnet, daß in einem, den zentralen Rechner (R') der Kunststoff-Spritzgießmaschine aufnehmenden luftdichten Schaltschrank (66) ein Thermofühler (63) und ein Wärmetauscher (62) angeordnet sind, der in einem durch Verschlußventil (64) steuerbaren Kühlkreislauf liegt, der seinerseits vom Zweig-Formstück (F') ausgeht.

**Claims**

1. Cooling apparatus for stabilising the temperature in the functionally critical temperature zones of a plastics material injection moulding machine, more especially by means of tap water, including coolant circuits which branch-off from a common supply channel (Z) and open out into a common discharge channel (A), which supply channel (Z) and discharge channel (A) comprise formed parts (F), which are arranged in rows, are shaped as channel sections (13; 13') and have connection nozzles (13"; 13"'), and including means for detecting the actual cooling requirement at any given time and for varying the flow rates in each coolant circuit, as required, by means of a throttle valve (rotary valve K), which is disposed in a formed part (F) forming part of the supply channel (Z) and defining the valve chamber (59) of the throttle valve (rotary valve K), characterised in that the flow rates in the coolant circuits are adjustable with the aid of a computer (R) by means of ceramic rotary valves (K in Fig. 4), the valve body discs (52) of which abut against valve seat discs (53) with ceramic sealing faces under constant pressure and are rotatable by means of pulse-controlled electric motors (stepping motors 44), and in that a channel (vertical channel 60 in Fig. 6), which extends vertically relative to the supply channel (Z) and discharge channel (A) and is covered by the valve seat disc (53) in order to form the valve chamber (59), is moulded into each of the parts (F), which comprise one channel section (13) for the supply channel (Z) and one channel section (13') for the discharge channel (A), between these two channel sections (13; 13').

2. Cooling apparatus according to claim 1, characterised in that the valve seat disc (53) lies on an annular shoulder of the associated part (F), which shoulder is formed at the transition region where the valve channel passes into a section of smaller internal diameter.

3. Cooling apparatus according to claim 1 or 2, characterised in that the valve body disc (52) and the valve seat disc (53) lie adjacent one another by the force of a pretensioned spring (55) and are shaped in such a manner that, upon rotation of the valve body disc (52), diametral, arcuate throughflow slots of increasing or decreasing length are produced, lapped ceramic sealing faces extending vertically relative to the valve axis (v-v).

4. Cooling apparatus according to one of claims 1-3, characterised in that the plastics material parts (F) are axially clamped together by means of tie-rods (20), which extend coaxially in the supply channel (Z) or discharge channel (A) respectively.

5. Cooling apparatus according to claim 4, characterised in that the valve chambers (59) communicate with the supply channel (Z) via chamfers of the channel sections (13), which chamfers extend symmetrically relative to the plane (e-e).

6. Cooling apparatus according to one of the preceding claims, characterised in that a valve-free branch part (F'), which is identical to the parts (F), is connected to the terminally situated part (F), and a computer housing (14), which is identical to the motor gear housings (15), is centred on this branch part (F').

7. Cooling apparatus according to one of the preceding claims, characterised in that sockets (housing sockets 33) are coaxially accommodated in the identical connection nozzles (13";

13"') of each coolant circuit, and shut-off valves (V) are disposed in said sockets and automatically close upon the removal of attachable connection nipples (37).

8. Cooling apparatus according to one of the preceding claims, characterised in that the parallelepiped motor gear housings (15) each have a cylindrical moulded-on portion (15a in Fig. 4), which extends coaxially with the valve axis (v-v) and extends centrally into the valve channel of the adjacent part (F).

9. Cooling apparatus according to one of the preceding claims, characterised in that tap water is feedable into the coolant circuits via connection nozzles (13") and is feedable from said circuits into the discharge channel (A) via connection nozzles (13"'), and in that these connection nozzles (13"; 13"') engage through the cross-piece member (10') of a U-shaped support rail (10) via openings (10").

10. Cooling apparatus according to one of the preceding claims, characterised in that a thermocouple (63) and a heat exchanger (62) are disposed in an air-tight switchgear cabinet (66), which accommodates the central computer (R') of the plastics material injection moulding machine, said heat exchanger lying in a coolant circuit, which is controllable by shut-off valve (64) and extends, in turn, from the branch part (F').

**Revendications**

1. Dispositif de refroidissement, notamment au moyen d'eau de ville, pour stabiliser la température dans les zones de températures fonctionnellement critiques d'une machine de moulage de matières plastiques par injection, comprenant des circuits de refroidissement qui bifurquent d'un canal commun d'afflux (Z) et débouchent dans un canal commun de sortie (A), lesdits canaux respectifs d'afflux (Z) et de sortie (A) étant composés de pièces moulées (F) mutuellement alignées, configurées en des segments de canaux (13 ; 13' ) et pourvues d'embouts de raccordement (13" ; 13"') ; et des appareils pour détecter les besoins considérés en refroidissement et pour faire varier les quantités débitées dans chaque circuit de refroidissement, en fonction des besoins, à l'aide d'une soupape d'étranglement (obturateur rotatif K) logée dans une pièce moulée (F) qui contribue à la formation du canal d'afflux (Z), et délimite la chambre de distribution (59) de la soupape d'étranglement (obturateur rotatif K),

caractérisé par le fait que les quantités débitées dans les circuits de refroidissement peuvent être régulées à l'aide d'un calculateur (R), au moyen d'obturateurs rotatifs en céramique (K sur la figure 4) dont les disques (52) des corps obturateurs, appliqués sous une pression permanente sur des disques de sièges (53), par des surfaces d'étanchement céramiques, peuvent être animés d'une rotation au moyen de moteurs électriques commandés par impulsions (moteurs 44 pas à pas) ;

et par le fait qu'un canal (canal obturateur 60 sur la figure 6), ménagé dans chacune des pièces moulées (F) comprenant un segment de canal (13) pour le canal d'afflux (Z) et un segment de canal (13') pour le canal de sortie (A), s'étend perpendiculairement au canal d'afflux (Z) et au canal de sortie (A) entre ces deux segments de canaux (13 ; 13'), et est recouvert par le disque (53) du siège de soupape en vue de former la chambre de distribution (59).

2. Dispositif de refroidissement selon la revendication 1, caractérisé par le fait que le disque (53) du siège de soupape est appliqué contre un épaulement annulaire de la pièce moulée (F) associée, qui est formé à la transition entre le canal obturateur et une région de largeur intérieure moindre.

3. Dispositif de refroidissement selon la revendication 1 ou 2, caractérisé par le fait que le disque (52) du corps obturateur et le disque (53) du siège de la soupape sont appliqués l'un contre l'autre par la force d'un ressort préchargé (55), et sont conformés de telle sorte qu'une rotation du disque (52) du corps obturateur donne naissance à des fentes diamétrales d'écoulement de configuration en arc de cercle et de longueur respectivement croissante ou décroissante, des surfaces d'étanchement rodées en céramique s'étendant perpendiculairement à l'axe (v-v) de l'obturateur.

4. Dispositif de refroidissement selon l'une des revendications 1-3, caractérisé par le fait que les pièces moulées (F) en matière plastique sont solidarisées par blocage, dans le sens axial, par l'intermédiaire de tirants d'ancrage (20) qui occupent une position coaxiale dans le canal respectif d'afflux (Z) ou de sortie (A).

5. Dispositif de refroidissement selon la revendication 4, caractérisé par le fait que les chambres de distribution (59) communiquent avec le canal d'afflux (Z) par des saignées des segments de canaux (13), agencées symétriquement par rapport au plan (e-e).

6. Dispositif de refroidissement selon l'une des revendications précédentes, caractérisé par le fait qu'une pièce moulée de bifurcation (F') dépourvue de soupape, identique aux pièces moulées (F), est raccordée à la pièce d'extrémité moulée (F), et un boîtier (14) de calculateur, identique aux carters de transmission (15) des moteurs, est centré sur cette pièce moulée de bifurcation (F').

7. Dispositif de refroidissement selon l'une des revendications précédentes, caractérisé par le fait que des manchons (manchons 33 du carter), logés coaxialement dans les embouts identiques (13'' ; 13''') de raccordement de chaque circuit de refroidissement, renferment des soupapes obturatrices (V) qui se ferment automatiquement lors du déboîtement de nipples de raccordement (37) accouplables.

8. Dispositif de refroidissement selon l'une des revendications précédentes, caractérisé par le fait que les carters quadrangulaires (15) de transmission des moteurs présentent, à chaque fois, un décolletage cylindrique [(15a) sur la figure 4] qui s'étend coaxialement à l'axe (v-v) de l'obturateur et pénètre, avec effet de centrage, dans le canal obturateur de la pièce moulée (F) voisine.

9. Dispositif de refroidissement selon l'une des revendications précédentes, caractérisé par le fait que de l'eau de ville peut être introduite dans les circuits de refroidissement par l'intermédiaire d'embouts de raccordement (13'') et peut être introduite dans le canal de sortie (A), en provenance desdits circuits, par l'intermédiaire d'embouts de raccordement (13''') ; et par le fait que ces embouts de raccordement (13'' ; 13''') traversent, par des perforations (10''), la membrure (10') d'un rail de support (10) configuré en U.

10. Dispositif de refroidissement selon l'une des revendications précédentes, caractérisé par le fait qu'une armoire de commutation (66) étanche à l'air, recevant le calculateur central (R') de la machine de moulage de matières plastiques par injection, renferme une sonde thermométrique (63) et un échangeur thermique (62) branché dans un circuit de refroidissement qui peut être commandé par une soupape obturatrice (64) et part, à son tour, de la pièce moulée de bifurcation (F').

FIG. 1

FIG. 2

EP 0 265 688 B1

# FIG. 3

# FIG. 4

EP 0 265 688 B1

FIG. 5

FIG. 6